# FASCICULE DE BREVET EUROPEEN

(11) **EP 3 366 081 B1**
(45) Date de publication et mention de la délivrance du brevet: **24.06.2020**
(21) Numéro de dépôt: 16790716.1
(22) Date de dépôt: 21.10.2016
(51) Int. Cl.: H05B 3/44, H05B 3/46, F24H 1/12

(54) **MODULE DE CHAUFFAGE POUR POMPE À LIQUIDE**
HEIZMODUL FÜR FLÜSSIGKEITSPUMPE
HEATING MODULE FOR LIQUID PUMP

(30) Priorité: 23.10.2015 CH 15522015
(43) Date de publication de la demande: 29.08.2018
(73) Titulaire: Gotec SA, 1950 Sion (CH)
(72) Inventeur: MAYORAZ, Pierre, 1981 Vex (CH)
(74) Mandataire: P&TS SA (AG, Ltd.)
(86) Numéro de dépôt international: PCT/IB2016/056339
(87) Numéro de publication internationale: WO 2017/068537

(56) Documents cités:
- EP-A1- 1 380 243
- EP-A2- 0 104 673
- WO-A1-2014/177442
- US-A- 3 835 294
- US-A1- 2015 202 555

## Description

### Domaine technique

La présente invention concerne un module de chauffage pour liquide. En particulier, la présente invention porte sur un module de chauffage apte à être monté directement sur l'extrémité d'une pompe à liquide (l'extrémité d'aspiration ou de refoulement). De cette façon, il est possible de chauffer un volume de liquide provenant de ou allant vers une pompe à liquide, en vue de la délivrance d'un tel volume de liquide chauffé selon les besoins.

La présente invention concerne également un ensemble d'alimentation en liquide chaud comprenant une pompe à liquide et un tel module de chauffage. Une telle pompe est par exemple une pompe électromagnétique.

Une application particulière de ce module de chauffage ou de cet ensemble d'alimentation en liquide chaud concerne le chauffage à une température donnée d'une dose de liquide, par exemple dans un distributeur de boissons chaudes. Un tel distributeur de boissons chaude requiert en particulier la production rapide d'une eau à une température comprise entre 60°C et 90°C, voire plus chaude en vue de produire de la vapeur. On peut notamment citer des cafetières électriques et des machines espresso.

### Etat de la technique

On connaît de nombreux exemples de pompes à liquide fonctionnant selon différents principes. Il existe par ailleurs différents types de dispositifs de chauffage d'eau. De nombreuses machines à café emploient un réservoir dans laquelle l'eau est préchauffée avant d'être pompée à travers la poudre de café puis versée dans les tasses. Ces dispositifs nécessitent de préchauffer un volume d'eau plus important que celui qui sera finalement utilisé, ce qui occasionne un gaspillage énergétique. Lorsqu'inversement on a besoin d'un volume de café supérieur à la contenance du réservoir, il est dans certains cas nécessaire d'attendre après le remplissage que l'eau nouvellement introduite ait été chauffée.

On connaît par ailleurs des dispositifs de chauffage de liquide en continu dans lesquels l'eau est chauffée lors de son passage dans un tube ou un tuyau. De tels dispositifs sont décrits par exemple dans la demande de brevet EP-A1-1380243 (Nestec SA), qui illustre un module de chauffage de liquide comportant un tube creux revêtu d'au moins deux résistances de chauffages, par exemple des fils ou des encres conductrices déposées sur un substrat. Une solution similaire est aussi décrite dans EP-A1-1097663.

Les solutions de l'art antérieur nécessitent en général une pompe pour faire circuler l'eau dans un tube de chauffage ou un thermobloc, et un débitmètre pour contrôler la quantité d'eau fournie. Le dispositif complet comporte donc de nombreuses pièces discrètes distinctes, complexes à combiner, et dont l'assemblage nécessite un volume important. Par ailleurs, la température de l'eau dépend à la fois du courant électrique dans le module de chauffage et du débit de l'eau dans le tube, ce qui nécessite une régulation assez complexe.

Notamment pour des raisons de réduction de l'encombrement, on veut éviter l'emploi de modules séparés dans les fonctions de pompage du liquide, de chauffage du liquide et de contrôle du débit du liquide. En outre, l'emploi de modules séparés et raccordés entre eux requiert le recours à des tubulures intermédiaires, ce qui engendre des risques de fuites, des étapes de montage et de maintenance supplémentaires, pour un encombrement plus important.

La demande de brevet EP-A1-496939 (Ricerca Elettromecanica) décrit une autre pompe pour machine à café comportant un piston coulissant dans un cylindre actionné par un moteur et un actuateur. La course du piston, qui détermine le volume de liquide aspiré puis rejeté dans le cylindre, est contrôlée à l'aide de micro-connecteurs ou d'un encodeur connectés au moteur. Les signaux des microswitches ou de l'encodeur sont traités par une électronique qui génère des signaux de commande pour le moteur. Le volume d'eau dans le cylindre est chauffé à l'aide d'un fil résistif bobiné autour de la surface externe du cylindre et parcouru par un courant électrique.

Cet arrangement permet de chauffer le liquide directement à l'intérieur de la pompe, de sorte qu'un tube de chauffage additionnel n'est pas requis. Par ailleurs, l'usage d'une pompe à piston permet de contrôler facilement le volume de liquide aspiré, simplement en modifiant la course du piston. Toutefois, la fabrication d'une telle pompe avec un bobinage externe est coûteuse. Il arrive par ailleurs que le fil de cette bobine casse ce qui créé un problème de fiabilité.

Le document WO2009/087203 (Gotec SA) décrit une pompe à liquide comprenant un circuit électrique de chauffage du cylindre du piston avec au moins deux branches afin de chauffer électriquement le liquide dans le cylindre, les branches étant réalisées sous la forme de piste mince électriquement conductrice déposée sur ou dans la paroi du cylindre et occupant des portions longitudinales différentes le long dudit cylindre, afin de contrôler la portion longitudinale du cylindre chauffée en sélectionnant les branches parcourues par un courant en fonction du volume de liquide chauffé à produire.

Le document WO2014053582 (Gotec SA) décrit une pompe à liquide à piston comprenant des cartouches de chauffages placées dans la paroi du cylindre de piston.

Ces solutions permettent d'intégrer la fonction de chauffage du liquide au sein même de la pompe mais présentent cependant des inconvénients.

En particulier, notamment pour des pompes avec thermoblocs, l'inertie thermique de la pompe oblige à réaliser une dépense énergétique beaucoup plus importante que ne le nécessite l'élévation de température du liquide et de son contenant.

En outre, réaliser le chauffage du liquide au sein de la pompe réalise une augmentation de la température de tous les composants de la pompe, et notamment des parties électromagnétiques, ce qui engendre une baisse de rendement et/ou une usure plus rapide de certaines de ces parties électromagnétiques. Notamment, l'élévation de température modifie les lignes de champ électromagnétiques.

Il faut également noter qu'en cas de panne, c'est tout l'ensemble réalisant les fonctions de pompe et de chauffage qu'il faut démonter, voire remplacer, ce qui rend l'opération plus complexe et potentiellement plus coûteuse qu'une intervention ciblée sur le seul module de chauffage par exemple.

Le document EP1046367 décrit une solution dans laquelle un corps de chauffe utilisant un profilé extrudé monobloc longitudinal définissant des canaux en relation thermique avec un élément de chauffage, les extrémités du profilé étant fermées par des flasques permettant de relier entre eux les canaux par des portions intermédiaires de chemin de liquide. L'un des flasques permet de relier la pompe à eau au profilé. Cependant, même si la liaison par tuyau est remplacée par ce type de liaison avec flasque, ce dernier conserve des inconvénients notamment en termes d'encombrement important et d'étanchéité qui reste à assurer à de nombreux emplacements au niveau de ce flasque.

Le document US3835294 concerne un module de chauffage de liquide pouvant être associé à une pompe placée en amont, notamment pour la projection de peinture. Le chauffage est réalisé par un élément résistif formé d'un tube de chauffage électrique axial central. Le liquide entre par le raccord d'entrée situé à la périphérie du module, circule dans une rainure entourant l'élément résistif et ressort par le raccord de sortie situé à la périphérie du module.

Le document US2015/202555 concerne un appareil de traitement de liquide, comportant un module d'échange thermique avec un fil résistif pour le chauffage ou le refroidissement de liquide contenu dans un réservoir formé autour du module, et une pompe placée de manière coaxiale, en aval du module, via une pièce de raccord femelle formant un rétrécissement annulaire.

### Bref résumé de l'invention

Un but de la présente invention est de proposer un module de chauffage exempt de tout ou partie des limitations des dispositifs connus.

Un autre but de l'invention est de permettre l'obtention d'une solution compacte et fiable du point de vue thermique et hydraulique, tout en permettant de réaliser le chauffage d'un liquide, notamment de l'eau, qui est par ailleurs pompé(e) pour réaliser son amenée vers une autre partie d'une machine ou d'un système requérant la distribution de ce liquide chauffé, notamment de l'eau chaude ou de la vapeur.

Selon l'invention, ces buts sont atteints notamment au moyen d'un module de chauffage pour liquide apte à être monté directement sur l'extrémité d'une pompe à liquide selon la revendication 1.

Cette solution présente notamment l'avantage par rapport à l'art antérieur de proposer une solution qui réalise le chauffage du liquide séparément de son pompage mais dans le prolongement direct de cette opération de pompage.

En pratique, le pompage peut être effectué au niveau de la pompe qui est placée soit en amont, soit en aval de ce module de chauffage, mais en tout cas dans le prolongement physique direct de ce module de chauffage. Ainsi, grâce à la portion terminale du module de chauffage qui forme un organe de liaison femelle (ou mâle), on utilise aucune autre pièce ou liaison intermédiaire entre le module de chauffage et la pompe. En effet, cet organe de liaison femelle (ou mâle) intégré à l'extrémité du module de chauffage est apte à coopérer directement avec une portion terminale formant un organe de liaison mâle (ou femelle) d'une pompe. On peut ainsi placer la pompe et le module de chauffage l'un derrière l'autre en série. Avantageusement, on peut placer la pompe et le module de chauffage de façon coaxiale l'un par rapport à l'autre.

De cette façon, on comprend que l'on peut utiliser le module de chauffage avec différent types et tailles de pompe. On peut également remplacer la pompe ou le module de chauffage, simplement en détachant les moyens de fixation et en ouvrant la liaison entre la portion terminale du module de chauffage et la portion terminale de la pompe.

De la même façon, on peut configurer la taille et notamment la longueur du module de chauffage en fonction de la catégorie de la pompe qui lui sera associée et en particulier en fonction du volume de liquide à chauffer et de la température à atteindre.

Dans un mode de réalisation, ladite portion amont ou ladite portion aval du module de chauffage formant ladite portion terminale délimite un logement central apte à loger une portion saillante d'une pompe à liquide. Dans ce cas, grâce à la portion terminale du module de chauffage qui comporte le logement central et forme un organe de liaison femelle intégré à l'extrémité du module de chauffage, le module de chauffage peut recevoir directement ladite portion saillante formant un organe de liaison mâle de la pompe. Dans ce cas, on peut remplacer la pompe ou le module de chauffage, simplement en détachant les moyens de fixation et en ouvrant la liaison entre le logement central du module de chauffage et la portion saillante de la pompe.

Dans un autre mode de réalisation ladite portion amont ou ladite portion aval du module de chauffage formant ladite portion terminale, délimite une portion saillante apte à être logée dans un logement central de la portion terminale d'une pompe à liquide.

Dans un mode de réalisation, ladite portion terminale, et notamment la portion saillante, de la pompe comprend une soupape (d'entrée ou de sortie).

Dans un mode de réalisation, les moyens de chauffage sont disposés selon un cylindre entourant ladite zone d'échange thermique du chemin de liquide. Cet agencement cylindrique des moyens de chauffage permet de disposer d'une surface d'échange maximale avec la zone d'échange thermique du chemin de liquide qui est disposée de manière périphérique. Cette disposition périphérique, autour d'une zone axiale, centrale du module de chauffage, permet d'augmenter la longueur du chemin de liquide parcouru dans la zone d'échange thermique. De préférence, la zone d'échange thermique est également disposée selon un cylindre contenu dans le cylindre correspondant aux moyens de chauffage.

Selon une disposition préférentielle, les moyens de chauffage sont électriques. De cette façon, il est facile de réaliser l'élévation de température du liquide, par une simple alimentation électrique. Cette dernière peut être sur secteur ou autonome (batterie ou autre).

Dans un mode de réalisation, la zone d'échange thermique du chemin de circulation de liquide présente une forme hélicoïdale. C'est une disposition permettant d'allonger le chemin de liquide et d'augmenter l'efficacité du chauffage en raccourcissant le temps de chauffe.

Par exemple, selon une autre disposition préférentielle, lesdits moyens de fixation comprennent une plaque de fixation équipée de deux trous de fixation. Cette disposition simple à mettre en œuvre permet d'attacher de manière fiable, et démontable, le module de chauffage à un autre module tel qu'une pompe. Ces trous seront en effet associés à d'autres éléments de fixation tels que des vis insérés dans ces trous et dans des alésages correspondants par exemple situées sur le carter de la pompe, notamment autour de la valve de sortie de la pompe.

Dans un mode de réalisation, c'est ladite portion amont du module de chauffage qui forme ladite portion terminale et ladite zone d'entrée de liquide communique avec ladite portion amont.

Dans un mode de réalisation, c'est la portion amont du module de chauffage qui délimite ledit logement central et ladite zone d'entrée de liquide communique avec ledit logement central. Cette configuration permet de monter la pompe en amont du module de chauffage qui se trouve en aval de la pompe.

Dans un mode de réalisation, la zone de sortie de liquide débouche à l'extérieur sensiblement au centre de la portion aval. Une telle disposition centrale, correspond à un emplacement axial qui facilite le raccordement du circuit fluidique avec l'organe ou l'équipement qui est placé en aval du module de chauffage. En effet, avantageusement, la portion aval du module de chauffage forme une portion de liaison en sortie. Un tel équipement peut être formé par exemple d'un débitmètre ou encore d'un capteur ou autre appareil de mesure ou de contrôle.

Selon une disposition préférentielle, lesdits moyens de chauffage comportent un circuit électrique de chauffage avec au moins une résistance afin de chauffer électriquement le liquide dans ladite zone d'échange thermique. C'est une solution de chauffage pratique et facilement mise en œuvre.

Egalement, la présente invention porte sur un ensemble d'alimentation en liquide chaud comprenant une pompe à liquide et un module de chauffage tel que décrit précédemment.

Cet ensemble d'alimentation peut comporter en outre avantageusement un débitmètre. Selon une possibilité, un tel débitmètre peut être placé à l'entrée de la pompe (en amont de la pompe), tandis que le module de chauffage est placé à la sortie de la pompe (en aval de la pompe).

En outre, la présente invention porte sur une machine de production de boisson chaude équipée d'un module de chauffage tel que décrit précédemment.

Par ailleurs, la présente invention porte sur une machine de production de boisson chaude équipée d'un ensemble d'alimentation en liquide chaud tel que décrit précédemment.

### Brève description des figures

Des exemples de mise en œuvre de l'invention sont indiqués dans la description illustrée par les figures annexées dans lesquelles :
- La figure 1 illustre en perspective un ensemble d'alimentation en liquide chaud comprenant une pompe et un module de chauffage selon un premier mode de réalisation,
- La figure 2 est une vue en projection de l'ensemble d'alimentation de la figure 1 selon la direction Il de la figure 1,
- La figure 3 est une vue en coupe de l'ensemble d'alimentation des figures 1 et 2, selon la direction III-III de la figure 2,
- La figure 4 est une vue en éclaté et en perspective du module de chauffage selon le premier mode de réalisation,
- La figure 5 est une vue en perspective du module de chauffage des figures 1 et 4, après montage des pièces le constituant,
- La figure 6 représente le module de chauffage des figures 4 et 5, en projection depuis la direction VI de la figure 5,
- La figure 7 est une vue en coupe du module de chauffage selon le premier mode de réalisation, selon la direction VII-VII de la figure 6,
- La figure 8 illustre en perspective un ensemble d'alimentation en liquide chaud comprenant une pompe et un module de chauffage selon un deuxième mode de réalisation, avec une pompe identique à celle des figures 1 à 3,
- La figure 9 est une vue en projection de l'ensemble d'alimentation de la figure 8 selon la direction IX de la figure 8, et
- La figure 10 est une vue en coupe de l'ensemble d'alimentation des figures 8 et 9, selon la direction X-X de la figure 9.

### Exemple(s) de mode de réalisation de l'invention

Dans le présent texte, les termes « amont » et « aval » désignent des positions relatives le long du parcours du liquide, et en particulier du liquide chauffé par le module de chauffage. Ainsi, dans le module de chauffage, le liquide parcourt la portion amont avant la portion aval.

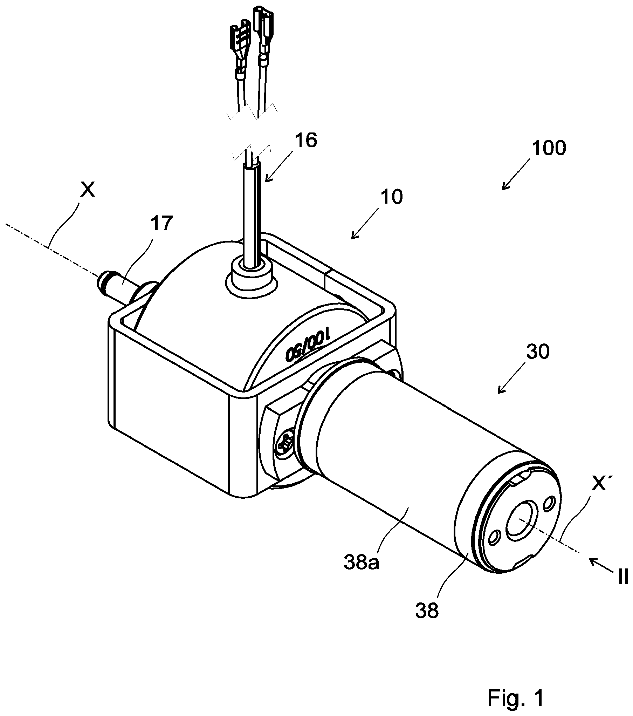

L'ensemble d'alimentation 100 de la figure 1 comporte une pompe 10 et un module de chauffage 30 selon un premier mode de réalisation.

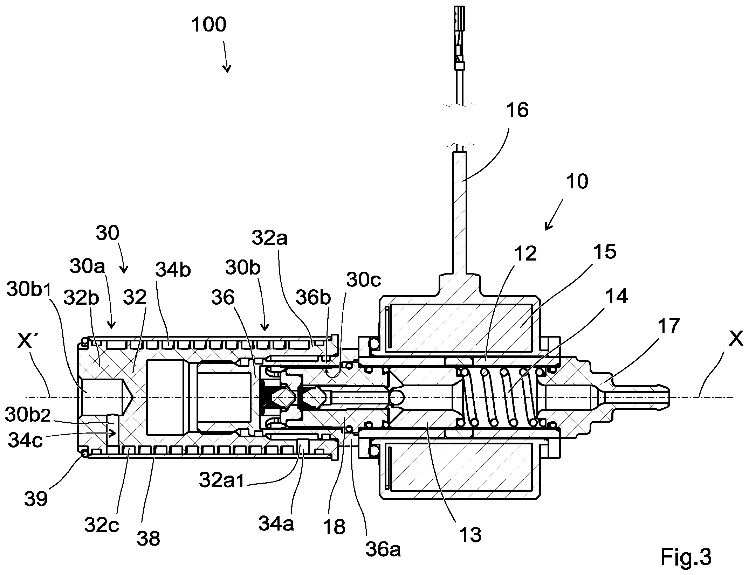

La pompe 10 est dans l'exemple illustré une pompe de type électromagnétique comportant un cylindre 12 de section cylindrique. Un piston 13 peut coulisser dans le cylindre, sa position de repos visible sur la figure 1 étant la position avancée (vers la gauche sur la figure 3) par la présence d'un ressort de compression 14. Des bobines périphériques 15 formant des aimants non permanents, reliées à un circuit électrique 16, créent un champ électromagnétique dont l'action permet le recul du piston 13 et le remplissage d'une chambre de pompage (délimitée par le cylindre 12, le piston 13 et la portion en amont de la soupape de sortie 18) par de l'eau provenant d'un réservoir non représenté, et ce au travers de l'embout d'entrée 17 de la pompe 10, située à l'entrée du cylindre 12. La modification du champ électromagnétique induit par les bobines 15, permet la libération du piston 13, qui sous l'action du ressort 14, comprime le liquide présent dans la chambre de pompage en direction de l'embout de sortie 18 avec la soupape de sortie, formant une portion saillante.

Par ailleurs, dans les modes de réalisation décrits précédemment, la pompe 10 est du type électromagnétique, mais l'ensemble d'alimentation 100 de l'invention n'est pas limité à ce type de pompe. De la même façon, le module de chauffage 30 objet de la présente invention peut être associé à d'autres types de pompes, telles que des pompes à piston mises en mouvement par des moteurs rotatifs avec un système de vis sans fin, de came, de bielle ou de courroie crantée, pour convertir la rotation en une translation : ou encore une pompe à engrenages, à membrane, à palettes...

La course du piston 13 délimite un volume correspondant à la quantité de liquide aspirée par l'embout d'entrée 17 puis expulsée via l'embout de sortie 18.

Un tel module de chauffage 30 constitue ce qui est par ailleurs appelé un corps de chauffe, formant la plupart du temps un sous-ensemble, remplissant les fonctions suivantes : élément de chauffage, échangeur thermique avec le liquide à chauffer et les raccordements de l'échangeur thermique avec les autres modules de la machine ou de l'appareil électroménager.

Selon un mode de réalisation non représenté, on peut inclure dans l'ensemble d'alimentation 100 un débitmètre. Avantageusement, un tel débitmètre peut être placé à l'entrée de la pompe 10 (en amont de la pompe 10). Selon une configuration possible, l'embout d'entrée 17 de la pompe 10 comprend ledit débitmètre, ainsi intégré directement à l'entrée de la pompe 10.

Le module de chauffage 30 comporte un corps tubulaire 32 qui est, dans l'exemple illustré, de forme cylindrique de section circulaire. Ce corps tubulaire 32 délimite partiellement le chemin de liquide 34 qui parcourt le module de chauffage 30. On distingue pour ce chemin de liquide 34 une zone d'entrée de liquide 34a dans la portion amont 30a du module 30, une zone de sortie de liquide 34c dans la portion aval 30b du module 30 et une zone d'échange thermique 34b située de manière périphérique entre ladite zone d'entrée 34a et ladite zone de sortie 34c.

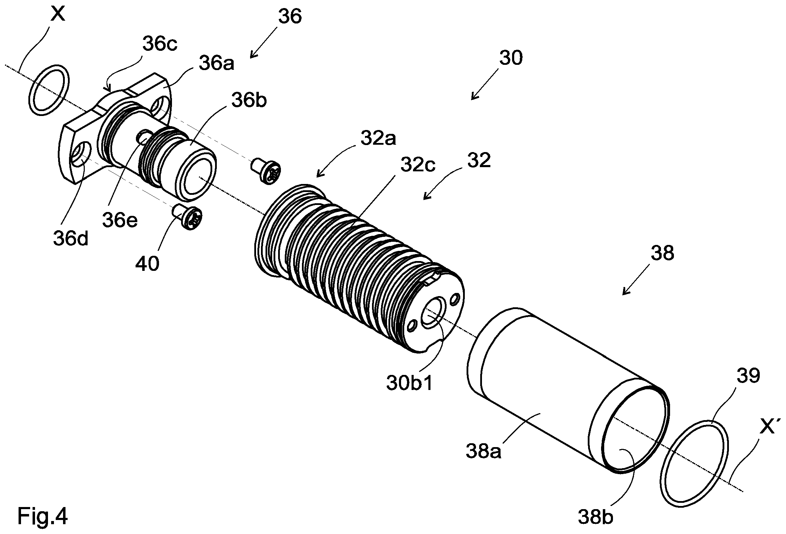

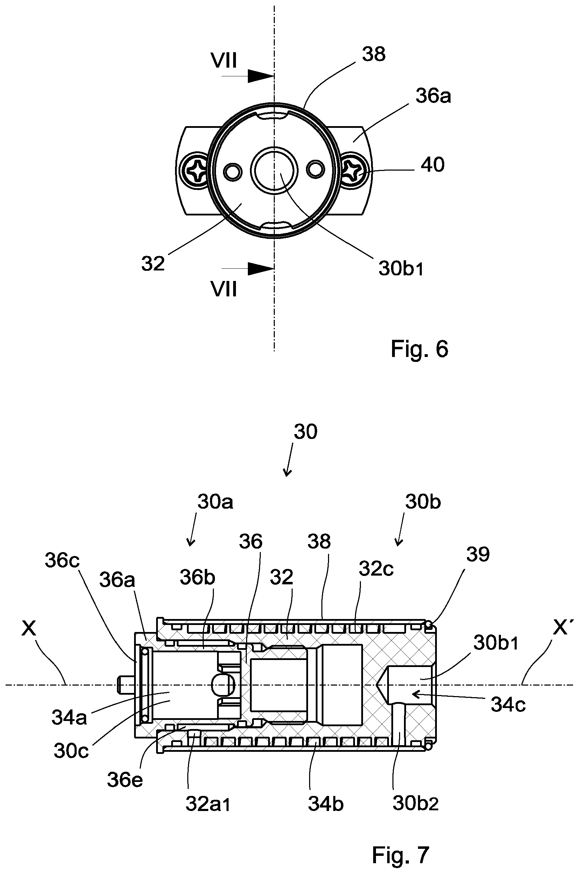

La zone d'entrée de liquide 34a débouche à l'extérieur (à droite sur la figure 3) sensiblement au centre de la portion amont 30a du module de chauffage 30. Cette portion amont 30a comporte le tronçon amont 32a du corps tubulaire 32 et la portion cylindrique 36b d'un insert 36 (voir la Fig.4), cette portion cylindrique 36b étant logée dans ledit tronçon amont 32a du corps tubulaire 32. Cette portion cylindrique 36b est creuse et forme une portion d'entrée femelle pour le module de chauffage 30, en délimitant un logement central 30c autour de l'axe X-X' ou axe longitudinal du module de chauffage 30 (voir Fig.7) .Comme on le voit sur la Fig. 3, ce logement central 30c reçoit une portion saillante correspondante de la pompe à liquide 10, formé ici de l'embout de sortie 18, et constituant un organe de liaison mâle. Ce logement central 30c coopère avec cette portion saillante pour réaliser d'une part un blocage mécanique et d'autre part une liaison fluidique entre le module de chauffage 30 et la pompe 10. Cette portion cylindrique 36b comporte en outre un (ou plusieurs) passage(s) 36e dans sa paroi (voir Fig.4), ce passage 36e communiquant avec un passage de liquide 32a1 radial du tronçon amont 32a du corps tubulaire 32 (voir la Fig.7). On relie ainsi le logement central 30c à la zone d'échange thermique 34b par le passage 36e de la paroi de la portion cylindrique 36b de l'insert 36 et par le passage radial 32a1 du corps tubulaire 32 (voir la figure 3). Ces liaisons fluidiques sont possibles dans la position opérationnelle (après montage) de l'insert 36 par rapport au corps tubulaire 32 : par exemple une liaison filetée permet le montage réversible de l'insert 36 dans le corps tubulaire 32, et l'arrivée en butée d'une portion de fixation 36a contre l'extrémité du corps tubulaire 32 signale la bonne position relative entre les pièces.

Comme il apparaît sur la Fig.4, l'insert 36 comporte en outre la portion de fixation 36a comportant des moyens de fixation autour d'une ouverture centrale 36c. En particulier, la portion de fixation 36a forme deux ailes de part et d'autre de l'ouverture centrale 36c, s'étendant selon un plan radial, orthogonal à l'axe X-X' du module de chauffage 30. Chaque aile est traversée d'un trou de fixation 36d qui peut coopérer avec une tige filetée ou vis 40 apte à être vissée dans un alésage correspondant par exemple situé sur le carter de la pompe, notamment autour de l'embout de sortie 18 de la pompe (voir la Fig. 6).

Ainsi, on comprend que la portion cylindrique 36b creuse prolonge la portion de fixation 36a et est logée dans ledit corps tubulaire 32 en délimitant ledit logement central 30c. On comprend que l'extrémité de la portion cylindrique 36b opposée à la portion de fixation 36a est fermée (la seule sortie pour le liquide présent dans le logement central 30c correspond au(x) passage 36e).

Dans une variante non représentée, le corps tubulaire 32 et l'insert 36 sont deux parties issues d'une seule et même pièce monobloc.

La zone de sortie de liquide 34c débouche à l'extérieur (à gauche sur la figure 3 et à droite sur la figure 7) sensiblement au centre de la portion aval 30b qui est pleine (extrémité fermée du corps tubulaire 32) hormis une cavité 30b1 débouchante centrée sur l'axe X-X' du corps tubulaire 32, située dans le tronçon aval 32b du corps tubulaire 32, et un passage 30b2 radial reliant ladite cavité 30b1 à la zone d'échange thermique 34b. Cette cavité 30b1 forme un organe de sortie femelle pour le module de chauffage 30.

La zone d'échange thermique 34b du chemin de liquide 34 est délimitée entre une rainure périphérique 32c formée sur la face extérieure du corps tubulaire 32, et un manchon 38 entourant ledit corps tubulaire 32 et équipé de moyens de chauffage. Un ou plusieurs joints 39 (voir les Fig.3 et 7) placés entre le corps tubulaire 32 et le manchon 38 assurent l'étanchéité de la zone d'échange thermique 34b du chemin de liquide 34.

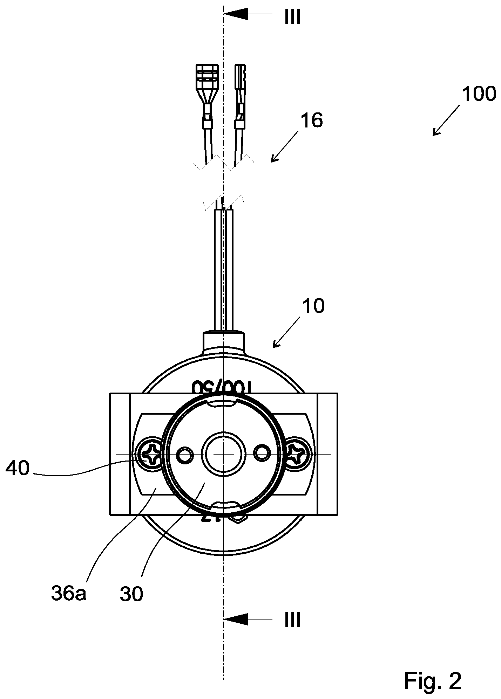

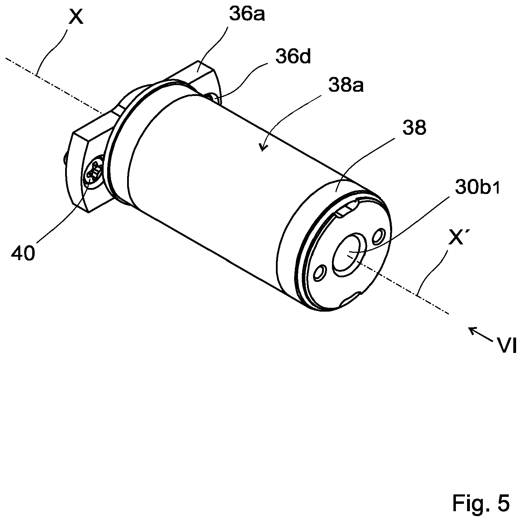

Dans le premier mode de réalisation (Fig.1 à 7), les moyens de chauffage comprennent au moins une résistance électrique qui est réalisée sous forme d'une ou de plusieurs pistes minces électriquement conductrices 38a déposées sur ou dans la paroi du manchon 38. Ces pistes 38a font partie d'un circuit électrique de chauffage ; les pistes ont une résistance électrique qui permet de produire de la chaleur lorsqu'un courant les traverse.

Le procédé de réalisation des pistes de chauffages consiste à sérigraphier une ou plusieurs couches de matériau isolant, puis une couche de pâte conductrice selon un chemin particulier, une couche pour former des plots de contact et enfin une ou plusieurs couches de matériau isolant. La puissance disponible peut être de l'ordre de 2000W. Selon une autre possibilité, les pistes sont constituées d'encre conductrice électriquement déposée en couches fines par sérigraphie ou par un autre procédé d'impression sur la surface externe du manchon 38. En effet, il a été constaté de manière surprenante que ce procédé permet d'imprimer des couches suffisamment épaisses et résistantes pour ne pas être détruites par les courants importants nécessaires au chauffage de l'eau - même si la tension d'alimentation est réduite, par exemple 12V ou 24V continu.

Cette résistance électrique 38a forme donc un ruban périphérique qui recouvre toute la surface externe du manchon 38 et forme une plaque de chauffage contre laquelle la rainure 32c force le liquide à couler. Si désiré, la résistance sérigraphiée peut être placée sur la face interne du manchon 38. Comme on peut notamment le voir sur la figure 4, le manchon 38 présente une forme de cylindre creux, de section circulaire, avec un espace interne 38b présentant également une forme de cylindre de section circulaire, coaxial avec le cylindre délimitant la face externe, la paroi de ce manchon présentant une épaisseur constante, faible de quelques millimètres.

Par ailleurs, la piste de cette résistance peut présenter une forme hélicoïdale, et se trouver à l'aplomb des canaux définis par la rainure 32c du corps tubulaire. Dans ce cas, l'efficacité du chauffage et sa rapidité sont améliorées.

Le manchon 38 est de préférence réalisé en métal, par exemple en acier inoxydable ou dans un autre matériau bon conducteur thermique. Ses faces externes sont au moins partiellement recouvertes de pistes électriques

La résistance électrique 38a à couches minces peut être remplacée par une résistance de type Egotherm (marque déposée), ou d'autres systèmes de chauffage similaires comportant des éléments de chauffages enroulés et soudés autour de la surface externe du manchon 38. Dans une variante, l'élément de chauffage est remplacé ou complété par un élément refroidissant, par exemple de type Peltier, afin d'abaisser la température d'un liquide qui entre préchauffé dans le module de chauffage 30.

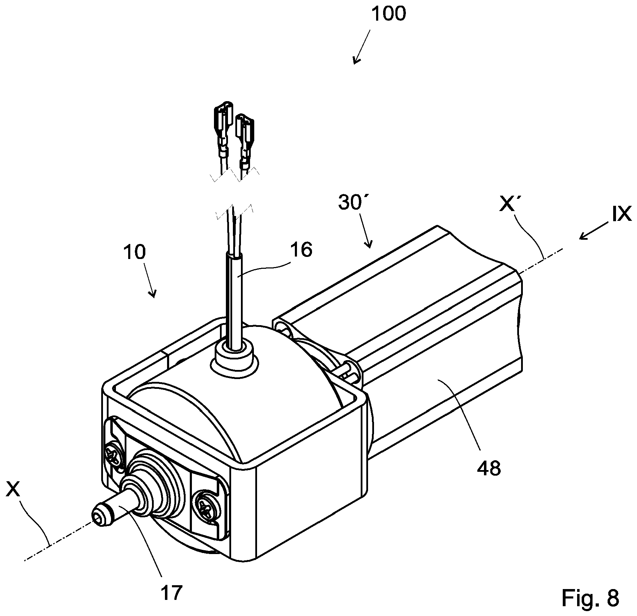

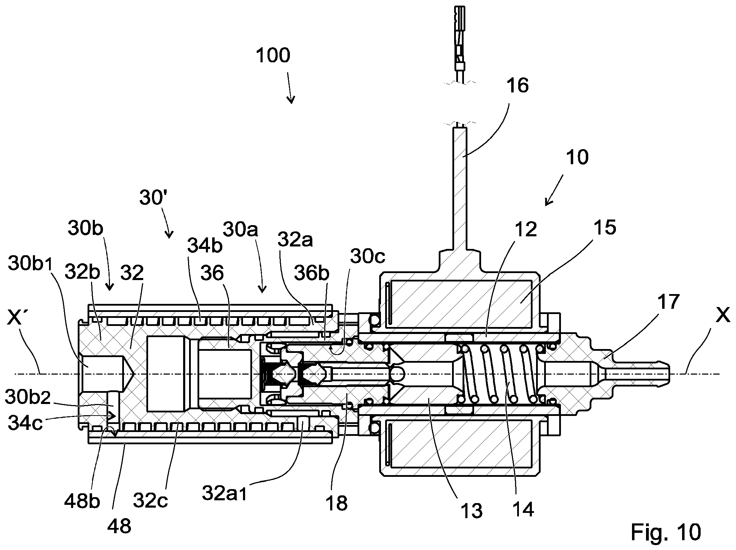

Dans le deuxième mode de réalisation (Fig.8 à 10), les moyens de chauffage du module de chauffage 30' comprennent au moins une résistance électrique qui est réalisée sous forme d'au moins une cartouche de chauffage 49 logée dans un passage longitudinal 48a formé dans la paroi du manchon 48.

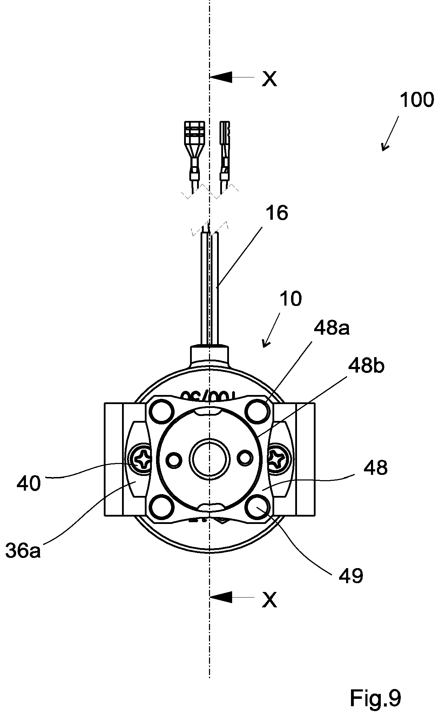

Comme on peut le voir sur les figures 8 et 9, le manchon 48 est avantageusement formé d'un cylindre creux avec un espace interne 48b présentant une forme de cylindre de section circulaire permettant le logement avec un jeu très faible du corps tubulaire 32, cet espace interne 48b étant coaxial avec la face externe. Pour permettre de loger les cartouches de chauffages 49, plutôt qu'une paroi d'épaisseur uniforme et une face externe en forme de cylindre de section circulaire, le manchon 48 présente une face externe en forme de cylindre de section proche d'un carré (ou de manière générale proche de la forme d'un polygone régulier), les côtés du carré n'étant pas rectiligne mais concave. De cette manière, on dispose du volume nécessaire dans la paroi, à l'emplacement des coins du carré, pour former des passages longitudinaux 48a suffisamment larges (d'un diamètre de l'ordre de 3 à 8 millimètres) pour recevoir chacun une cartouche de chauffage. Par ailleurs, avec cette configuration géométrique, entre deux coins du carré, la paroi est beaucoup plus mince, ce qui réduit l'inertie thermique du module de chauffage 30.

En utilisant cette cartouche de chauffage 49 formée d'un tube de chauffage électrique, on peut ainsi utiliser un composant commercialement disponible. La liaison thermique avec les canaux répartis autour de l'axe est assurée dans les meilleures conditions de distance, c'est à dire au plus près.

Selon une variante, la cartouche de chauffage 49 est brasée dans le manchon 48. Les jeux éventuels entre la cartouche de chauffage 49 et le manchon 48 sont supprimés et la liaison thermique est parfaitement assurée. Bien qu'on ait pu utiliser une colle ou une graisse thermique ou une résine autour de la cartouche de chauffage 49, la brasure a l'avantage de permettre une fixation plus solide et plus éprouvée donc plus fiable.

A part ces différences concernant le manchon 48 et les moyens de chauffage utilisés, le module de chauffage 30' selon le deuxième mode de réalisation tel que représenté sur les Fig.8 à 10 est identique au module de chauffage 30 selon le premier mode de réalisation précédemment décrit.

Sur les Fig.8 à 10, on a également représenté une pompe 10 identique à celle décrite en relation avec les Fig.1 à 3, au sein d'un système d'alimentation en liquide 100.

Dans les modes de réalisation décrits en relation avec les figures 1 à 10, on a représenté le cas de figure dans lequel le raccordement entre la pompe 10 et le module chauffant 30 s'effectue entre une portion saillante formant un organe de liaison mâle (embout 18) située sur la portion terminale de la pompe et un logement central 30c formant un organe de liaison femelle située sur la portion terminale du module chauffant 30 ou 30' . Par analogie, on peut envisager le cas de figure (non représenté) dans lequel le raccordement entre la pompe 10 et le module chauffant 30 s'effectue entre un logement central formant un organe de liaison femelle située sur la portion terminale de la pompe et une portion saillante formant un organe de liaison mâle située sur la portion terminale du module chauffant 30 ou 30'

Dans les modes de réalisation décrits précédemment, la pompe 10 et ledit module de chauffage 30 ou 30' sont montés l'un derrière l'autre en série, et de façon coaxiale. On peut envisager d'autres géométries pour ce montage en série, telles qu'une géométrie coudée, notamment lorsque l'organe de liaison femelle du module de chauffage reçoit un organe de liaison mâle coudé de la pompe à liquide.

Par ailleurs, dans les modes de réalisation décrits précédemment, la pompe est du type à piston, mais l'ensemble d'alimentation de l'invention n'est pas limité à ce type de pompe. De la même façon, le module de chauffage objet de la présente invention peut être associé à d'autres types de pompes. En particulier, on peut utiliser une pompe à engrenages, à membrane, à palettes....

Egalement, dans les modes de réalisation décrits précédemment, le module de chauffage 30 ou 30' est placé en en aval de la pompe 10 mais l'association du module de chauffage avec une pompe n'est pas limité à cette configuration, la pompe pouvant être placée en aval du module de chauffage, le liquide préchauffé étant ainsi pompé et envoyé dans un autre organe utilisant ce liquide chauffé.

Dans les modes de réalisation décrits plus haut, le liquide est chauffé dans le module de chauffage 30 ou 30'. Il est cependant aussi possible d'aspirer et de transférer un liquide avec la pompe 10 du système d'alimentation en liquide 100 sans le chauffer, notamment en commandant le module de chauffage 30 ou 30'de manière à ne pas y faire circuler de courant.

Le module de chauffage et l'ensemble d'alimentation de l'invention peuvent être employés par exemple pour un distributeur de boisson chaude, notamment une machine à café, y compris une machine à café pour voiture ou caravane ou mobile-home, ou tous véhicules autonomes électriquement tels qu'avions, taxi, trains, bateaux, etc. Un module de chauffage similaire peut aussi être employé pour le chauffage de liquide dosé dans l'industrie alimentaire ou cosmétique, ou encore pour le chauffage d'une colle, etc

### Numéros de référence employés sur les figures

- 10: Pompe
- 12: cylindre
- 13: Piston
- 14: Ressort de compression
- 15: Bobines périphériques
- 16: Circuit électrique
- 17: Embout d'entrée
- 18: Embout de sortie avec soupape de sortie
- 30, 30': Module de chauffage
- 30a: Portion amont
- 30b: Portion aval
- 30b1: Cavité
- 30b2: passage
- 30c: Logement central
- 32: Corps tubulaire
- 32a: Tronçon amont
- 32b: Tronçon aval
- 32a1: Passage
- 32c: Rainure périphérique
- 34: Chemin de liquide
- 34a: Zone d'entrée
- 34b: Zone d'échange thermique
- 34c: Zone de sortie
- 36: Insert
- 36a: Portion de fixation
- 36b: Portion cylindrique
- 36c: Ouverture
- 36d: Trous de fixation
- 36e: Passage
- 38: manchon
- 38a: Piste sérigraphiée
- 38b: Espace interne
- 39: Joint
- 40: Vis
- 48: Manchon
- 48a: Passage
- 48b: Espace interne
- 49: Cartouche de chauffage
- 100: Ensemble d'alimentation en liquide chauffé

## Revendications

1. Module de chauffage (30; 30') pour liquide, s'étendant en direction longitudinale entre une portion amont (30a) permettant l'entrée d'un liquide et une portion aval (30b) permettant la sortie du liquide, ladite portion amont (30a) ou ladite portion aval (30b) formant une portion terminale , ledit module de chauffage (30 ; 30') comprenant en outre
- un chemin de liquide (34) délimité entre un corps tubulaire (32) et un manchon (38; 48) entourant ledit corps tubulaire (32), ledit chemin de liquide (34) comportant une zone d'entrée de liquide (34a) dans la portion amont (30a) du module, une zone de sortie de liquide (34c) dans la portion aval (30b) du module et une zone d'échange thermique (34b) située de manière périphérique entre ladite zone d'entrée de liquide (34a) et ladite zone de sortie de liquide (34c),
- des moyens de chauffage (38a ; 49) électriques situés autour de ladite zone d'échange thermique (34b) pour permettre de chauffer le liquide parcourant le chemin de liquide (34),
**caractérisé en ce que** :
- ladite portion terminale délimite un logement central (30c),
- ledit chemin de liquide (34) communique avec ledit logement central (30c),et
- ledit module de chauffage (30; 30') comprend également des moyens de fixation (36a, 36d) disposés sur l'extrémité de la portion terminale.

2. Module de chauffage (30 ; 30') selon la revendication 1, dans lequel les moyens de chauffage (38a ; 49) sont disposés selon un cylindre entourant ladite zone d'échange thermique (34b) du chemin de liquide (34).

3. Module de chauffage (30 ; 30') selon l'une quelconque des revendications 1 et 2, dans lequel la zone d'échange thermique (34b) du chemin de liquide (34) présente une forme hélicoïdale.

4. Module de chauffage (30 ; 30') selon l'une quelconque des revendications 1 à 3, dans lequel ladite portion amont (30a) forme ladite portion terminale et dans lequel ladite zone d'entrée de liquide (34a) communique avec ladite portion amont (30a).

5. Module de chauffage (30 ; 30') selon la revendication 1, dans lequel ladite portion amont (30a) délimite ledit logement central (30c) et dans lequel ladite zone d'entrée de liquide (34a) communique avec ledit logement central (30c).

6. Module de chauffage (30 ; 30') selon l'une quelconque des revendications 1 à 5, dans lequel la zone de sortie de liquide (34c) débouche à l'extérieur sensiblement au centre de la portion aval (30b).

7. Module de chauffage (30 ; 30') selon l'une quelconque des revendications 1 à 5, dans lequel la zone d'échange thermique (34b) du chemin de liquide (34) est délimitée entre ledit corps tubulaire (32) dont la face extérieure comporte une rainure périphérique (32c) délimitant le chemin de liquide (34), et ledit manchon (38 ; 48) entourant ledit corps tubulaire et équipé desdits moyens de chauffage (38a ; 49).

8. Module de chauffage (30 ; 30') selon la revendication précédente, dans lequel lesdits moyens de chauffage (38a ; 49) comportent un circuit électrique de chauffage avec au moins une résistance afin de chauffer électriquement le liquide dans ladite zone d'échange thermique (34b).

9. Module de chauffage (30) selon la revendication précédente, dans lequel ladite résistance est réalisée sous forme d'une piste (38a) mince électriquement conductrice déposée sur ou dans la paroi du manchon (38) ou bien sous forme d'au moins une cartouche de chauffage (49) logée dans un passage longitudinal (48a) formé dans la paroi du manchon (48).

10. Module de chauffage (30 ; 30') selon la revendication 7, comportant en outre un insert (36) avec une portion de fixation (36a) formant lesdits moyens de fixation et comprenant une ouverture (36c), et une portion cylindrique (36b) creuse prolongeant ladite portion de fixation (36a) et logée dans ledit corps tubulaire (32) en délimitant ledit logement central (30c).

11. Ensemble d'alimentation (100) en liquide chaud comprenant une pompe à liquide (10) et un module de chauffage (30; 30') selon l'une quelconque des revendications 1 à 10 et, dans lequel ladite pompe à liquide (10) et ledit module de chauffage (30; 30') sont montés directement l'un derrière l'autre en série, de façon coaxiale.

12. Ensemble d'alimentation (100) selon la revendication 11, dans lequel la pompe à liquide (10) est une pompe électromagnétique.

13. Ensemble d'alimentation (100) selon l'une quelconque des revendications 11 et 12, dans lequel ledit module de chauffage (30; 30') est placé en en aval de ladite pompe à liquide (10).

14. Ensemble d'alimentation (100) selon l'une quelconque des revendications 11 à 13, dans lequel ledit logement central (30c) d'un module de chauffage (30, 30') est apte à loger une portion saillante (18) de ladite pompe à liquide (10) comprenant une soupape.

15. Machine de production de boisson chaude équipée d'un module de chauffage (30; 30') selon l'une quelconque des revendications 1 à 10.

## Patentansprüche

1. Heizmodul (30; 30') für Flüssigkeit, das sich in Längsrichtung zwischen einem stromaufwärtigen Abschnitt (30a), der das Eintreten einer Flüssigkeit ermöglicht, und einem stromabwärtigen Abschnitt (30b), der das Austreten der Flüssigkeit ermöglicht, erstreckt, wobei der stromaufwärtige Abschnitt (30a) oder der stromabwärtige Abschnitt (30b) einen Endabschnitt bildet, wobei das Heizmodul (30; 30') ferner umfasst:
- einen Flüssigkeitspfad (34), der zwischen einem rohrförmigen Körper (32) und einer den rohrförmigen Körper (32) umgebenden Hülse (38; 48) begrenzt ist, wobei der Flüssigkeitspfad (34) einen Flüssigkeitseintrittsbereich (34a) in dem stromaufwärtigen Abschnitt (30a) des Moduls, einen Flüssigkeitsaustrittsbereich (34c) in dem stromabwärtigen Abschnitt (30b) des Moduls und einen Wärmeaustauschbereich (34b), der umfänglich zwischen dem Flüssigkeitseintrittsbereich (34a) und dem Flüssigkeitsaustrittsbereich (34c) gelegen ist, beinhaltet,
- elektrische Heizeinrichtungen (38a; 49), die um den Wärmeaustauschbereich (34b) herum gelegen sind, um das Erhitzen der den Flüssigkeitspfad (34) durchströmenden Flüssigkeit zu ermöglichen,
**dadurch gekennzeichnet, dass**:
- der Endabschnitt eine zentrale Aufnahme (30c) begrenzt,
- der Flüssigkeitspfad (34) mit der zentralen Aufnahme (30c) in Verbindung steht und
- das Heizmodul (30; 30') auch Befestigungseinrichtungen (36a, 36d) umfasst, die am Ende des Endabschnitts angeordnet sind.

2. Heizmodul (30; 30') nach Anspruch 1, bei dem die Heizeinrichtungen (38a; 49) entlang eines Zylinders angeordnet sind, der den Wärmeaustauschbereich (34b) des Flüssigkeitspfades (34) umgibt.

3. Heizmodul (30; 30') nach einem der Ansprüche 1 und 2, bei dem der Wärmeaustauschbereich (34b) des Flüssigkeitspfades (34) eine schraubenförmige Form aufweist.

4. Heizmodul (30; 30') nach einem der Ansprüche 1 bis 3, bei dem der stromaufwärtige Abschnitt (30a) den Endabschnitt bildet und bei dem der Flüssigkeitseintrittsbereich (34a) mit dem stromaufwärtigen Abschnitt (30a) in Verbindung steht.

5. Heizmodul (30; 30') nach Anspruch 1, bei dem der stromaufwärtige Abschnitt (30a) die zentrale Aufnahme (30c) begrenzt und bei dem der Flüssigkeitseintrittsbereich (34a) mit der zentralen Aufnahme (30c) in Verbindung steht.

6. Heizmodul (30; 30') nach einem der Ansprüche 1 bis 5, bei dem der Flüssigkeitsaustrittsbereich (34c) außen im Wesentlichen im Zentrum des stromabwärtigen Abschnitts (30b) mündet.

7. Heizmodul (30; 30') nach einem der Ansprüche 1 bis 5, bei dem der Wärmeaustauschbereich (34b) des Flüssigkeitspfades (34) zwischen dem rohrförmigen Körper (32), dessen Außenfläche eine den Flüssigkeitspfad (34) begrenzende umfängliche Nut (32c) beinhaltet, und der Hülse (38; 48), die den rohrförmigen Körper umgibt und mit den Heizeinrichtungen (38a; 49) ausgestattet ist, begrenzt ist.

8. Heizmodul (30; 30') nach dem vorhergehenden Anspruch, bei dem die Heizeinrichtungen (38a; 49) eine elektrische Heizschaltung mit mindestens einem Widerstand beinhalten, um die Flüssigkeit in dem Wärmeaustauschbereich (34b) elektrisch zu erhitzen.

9. Heizmodul (30) nach dem vorhergehenden Anspruch, bei dem der Widerstand in Form einer elektrisch leitfähigen dünnen Bahn (38a) ausgeführt ist, die auf oder in der Wand der Hülse (38) aufgebracht ist, oder aber in Form einer Heizpatrone (49), die in einem in der Wand der Hülse (48) gebildeten Längsdurchlass (48a) aufgenommen ist.

10. Heizmodul (30; 30') nach Anspruch 7, beinhaltend ferner einen Einsatz (36) mit einem Befestigungsabschnitt (36a), der die Befestigungseinrichtungen bildet und eine Öffnung (36c) umfasst, und einem hohlen zylindrischen Abschnitt (36b), der den Befestigungsabschnitt (36a) verlängert und in dem rohrförmigen Körper (32) aufgenommen ist, wobei er die mittige Aufnahme (30c) begrenzt.

11. Anordnung zur Versorgung (100) mit heißer Flüssigkeit, die eine Flüssigkeitspumpe (10) und ein Heizmodul (30; 30') nach einem der Ansprüche 1 bis 10 umfasst und bei der die Flüssigkeitspumpe (10) und das Heizmodul (30; 30') direkt in Reihe hintereinander koaxial montiert sind.

12. Versorgungsanordnung (100) nach Anspruch 11, bei der die Flüssigkeitspumpe (10) eine elektromagnetische Pumpe ist.

13. Versorgungsanordnung (100) nach einem der Ansprüche 11 und 12, bei der das Heizmodul (30; 30') stromab der Flüssigkeitspumpe (10) platziert ist.

14. Versorgungsanordnung (100) nach einem der Ansprüche 11 bis 13, bei der die zentrale Aufnahme (30c) eines Heizmoduls (30, 30') geeignet ist, einen vorstehenden Abschnitt (18) der Flüssigkeitspumpe (10) aufzunehmen, der ein Ventil umfasst.

15. Maschine zur Bereitung eines Heißgetränks, die mit einem Heizmodul (30; 30') nach einem der Ansprüche 1 bis 10 ausgestattet ist.

## Claims

1. A heating module (30; 30') for liquid, extending in a longitudinal direction between an upstream portion (30a) allowing a liquid to enter and a downstream portion (30b) allowing the liquid to exit, said upstream portion (30a) or said downstream portion (30b) forming a terminal portion, said heating module (30; 30') further comprising:
- a path (34) for liquid delimited between a tubular body (32) and a sleeve (38; 48) surrounding said tubular body (32), said path (34) for liquid comprising a liquid inlet zone (34a) in the upstream portion (30a) of the module, a liquid outlet zone (34c) in the downstream portion (30b) of the module, and a heat exchange zone (34b) located peripherally between said liquid inlet zone (34a) and said liquid outlet zone (34c),
- electric heating means (38a; 49) located around said heat exchange zone (34b) to enable the liquid travelling along the path (34) for liquid to be heated, **characterized in that**:
- said terminal portion bounds a central housing (30c),
- said path (34) for liquid communicates with said central housing (30c), and
- said heating module (30; 30') further comprises attachment means (36a, 36d) located at the extremity of the terminal portion.

2. The heating module (30; 30') as claimed in claim 1, wherein the heating means (38a; 49) are arranged as a cylinder surrounding said heat exchange zone (34b) of the path (34) for liquid.

3. The heating module (30; 30') as claimed in any of claims 1 and 2, in which the heat exchange zone (34b) of the path (34) for liquid is of helical shape.

4. The heating module (30; 30') as claimed in any of claims 1 to 3, wherein said upstream portion (30a) forms said terminal portion and in which said liquid inlet zone (34a) communicates with said upstream portion (30a).

5. The heating module (30; 30') as claimed in claim 1, wherein said upstream portion (30a) bounds said central housing (30c) and in which said liquid inlet zone (34a) communicates with said central housing (30c).

6. The heating module (30; 30') as claimed in any of claims 1 to 5, wherein the liquid outlet zone (34c) opens out to the exterior substantially in the center of the downstream portion (30b).

7. The heating module (30; 30') as claimed in any of claims 1 to 5, wherein the heat exchange zone (34b) of the path (34) for liquid is bounded between said tubular body (32), the outer surface of which incorporates a peripheral groove (32c) bounding the path (34) for liquid, and said sleeve (38; 48) surrounding said tubular body and provided with said heating means (38a; 49).

8. The heating module (30; 30') as claimed in preceding claim, wherein said heating means (38a; 49) comprise an electric heating circuit with at least one resistance to heat the liquid electrically in said heat exchange zone (34b).

9. The heating module (30) as claimed in preceding claim, wherein said resistance is constructed in the form of a thin electrically-conducting track (38a) deposited on or in the wall of the sleeve (38) or in the form of at least one heating cartridge (49) housed in a longitudinal passage (48a) formed in the wall of the sleeve (48).

10. The heating module (30; 30') as claimed in claim 7, further comprising an insert (36) with an attachment portion (36a) forming said attachment means and comprising an opening (36c) and a hollow cylindrical portion (36b) extending said attachment portion (36a) and housed in said tubular body (32) by bounding said central housing (30c).

11. A feed assembly (100) for hot liquid comprising a liquid pump (10) and a heating module (30; 30') as claimed in any of claims 1 to 10, wherein said liquid pump (10) and said heating module (30; 30') are mounted directly one behind the other in series, and coaxially.

12. The feed assembly (100) as claimed in claim 11, wherein the liquid pump (10) is an electromagnetic pump.

13. The feed assembly (100) as claimed in any of claims 11 and 12, wherein said heating module (30; 30') is located downstream from said liquid pump (10).

14. The feed assembly (100) as claimed in any of claims 11 to 13, wherein said central housing (30c) of a heating module (30; 30') is capable of housing a projecting portion (18) of a liquid pump (10) incorporating a valve.

15. A machine for producing hot drinks fitted with a heating module (30; 30') as claimed in any of claims 1 to 10.
